# EUROPEAN PATENT APPLICATION

(11) **EP 4 306 876 A1**
(43) Date of publication of application: **17.01.2024**
(21) Application number: 22780169.3
(22) Date of filing: 17.03.2022
(51) Int. Cl.: F25B 21/00

(54) **MAGNETIC REFRIGERATION DEVICE AND REFRIGERATION DEVICE**

(30) Priority: 29.03.2021 JP 2021054799
(71) Applicant: Daikin Industries, Ltd., Osaka-shi, Osaka 530-0001 (JP)
(72) Inventor: ASANO, Yoshinari, Osaka-shi, Osaka 530-0001 (JP); UEDA, Akane, Osaka-shi, Osaka 530-0001 (JP); TANAKA, Mitsuhiro, Osaka-shi, Osaka 530-0001 (JP); HIBINO, Hiroshi, Osaka-shi, Osaka 530-0001 (JP)
(74) Representative: Hoffmann Eitle
(86) International application number: PCT/JP2022/012223
(87) International publication number: WO 2022/209949

(57) **Abstract**

A magnetic field application unit (20) includes one magnetic field generator (21), the first core (30), and the second core (40). The first core (30) is provided closer to one of the magnetic poles of the magnetic field generator (21). The second core (40) is provided closer to the other magnetic pole of the magnetic field generator (21). Three or more magnetic gaps are provided between the first core (30) and the second core (40) and are arranged at second intervals that are twice or more the first intervals in the first direction.

## Description

### TECHNICAL FIELD

The present disclosure relates to a magnetic refrigerator and a refrigeration apparatus.

### BACKGROUND ART

Patent Document 1 discloses a magnetic heat pump device. This magnetic heat pump device includes permanent magnets housed in multiple housing portions, and a magnetic field is applied to a magnetic material from two poles (protrusions) provided closer to a material container than the permanent magnets in the housing portions.

### CITATION LIST

### PATENT DOCUMENT

Patent Document 1: WO 2019/150819

### SUMMARY OF THE INVENTION

### TECHNICAL PROBLEM

The invention of Patent Document 1 requires four permanent magnets to provide the two poles. Thus, increasing the poles requires more permanent magnets, disadvantageously increasing the number of assembling steps and parts cost.

An object of the present disclosure is to increase the number of poles without increasing the cost of the whole apparatus.

### SOLUTION TO THE PROBLEM

A first aspect of the present disclosure is directed to a magnetic refrigerator including: a plurality of magnetic working substances (11) arranged at predetermined first intervals in a first direction; and a magnetic field application unit (20) that makes a relative movement with respect to the magnetic working substances (11) in the first direction and applies a magnetic field to the magnetic working substances (11), wherein the magnetic field application unit (20) includes one magnetic field generator (21), a first core (30) provided closer to one of magnetic poles of the magnetic field generator (21), and a second core (40) provided closer to the other magnetic pole of the magnetic field generator (21), and three or more magnetic gaps are provided between the first core (30) and the second core (40) and are arranged at second intervals that are twice or more the first intervals in the first direction.

According to the first aspect, the magnetic working substances (11) are arranged at the first intervals in the first direction. The magnetic field application unit (20) makes a relative movement with respect to the magnetic working substances (11) in the first direction. The magnetic field application unit (20) includes one magnetic field generator (21), the first core (30), and the second core (40). The first core (30) is provided closer to one of the magnetic poles of the magnetic field generator (21). The second core (40) is provided closer to the other magnetic pole of the magnetic field generator (21). Three or more magnetic gaps are provided between the first core (30) and the second core (40) and are arranged at second intervals that are twice or more the first intervals in the first direction.

This can increase the number of poles without increasing the number of magnetic field generators (21), reducing the size of the magnetic refrigerator and the number of assembling steps.

A second aspect of the present disclosure is an embodiment of the magnetic refrigerator of the first aspect. In the second aspect, the relative movement is a relative rotational movement about a predetermined axis, and the first direction is a circumferential direction.

According to the second aspect, the magnetic refrigerator having the magnetic field application unit (20) that makes a relative rotational movement with respect to the magnetic working substances (11) can be provided.

A third aspect of the present disclosure is an embodiment of the magnetic refrigerator of the second aspect. In the third aspect, the magnetic field generator (21) is configured to generate a magnetic field in an axial direction, the first core (30) includes a first protrusion (35) extending in a radial direction, the second core (40) includes a second protrusion (45) extending in the radial direction and facing the first protrusion (35), and the magnetic gap is provided between the first protrusion (35) and the second protrusion (45).

According to the third aspect, a magnetic flux is allowed to flow along the axial direction of the magnetic working substances (11).

A fourth aspect of the present disclosure is an embodiment of the magnetic refrigerator of the second aspect. In the fourth aspect, the magnetic field generator (21) is configured to generate a magnetic field in a radial direction, the first core (30) includes a first protrusion (35) extending in a radial direction, the second core (40) includes a second protrusion (45) extending in the radial direction and facing the first protrusion (35), and the magnetic gap is provided between the first protrusion (35) and the second protrusion (45).

According to the fourth aspect, a magnetic flux is allowed to flow in the axial direction of the magnetic working substances (11).

A fifth aspect of the present disclosure is an embodiment of the magnetic refrigerator of the second aspect. In the fifth aspect, the magnetic field generator (21) is configured to generate a magnetic field in a radial direction, the first core (30) includes a first protrusion extending in an axial direction, the second core (40) includes a second protrusion (45) extending in the axial direction and facing the first protrusion (35), and the magnetic gap is provided between the first protrusion (35) and the second protrusion (45).

According to the fifth aspect, a magnetic flux is allowed to flow in the radial direction of the magnetic working substances (11).

A sixth aspect of the present disclosure is an embodiment of the magnetic refrigerator of the second aspect. In the sixth aspect, the magnetic field generator (21) is configured to generate a magnetic field in an axial direction, the first core (30) includes a first protrusion (35) extending in an axial direction, the second core (40) includes a second protrusion (45) extending in the axial direction and facing the first protrusion (35), and the magnetic gap is provided between the first protrusion (35) and the second protrusion (45).

According to the sixth aspect, a magnetic flux is allowed to flow in the radial direction of the magnetic working substances (11).

A seventh aspect of the present disclosure is an embodiment of the magnetic refrigerator of the second aspect. In the seventh aspect, the magnetic field generator (21) is configured to generate a magnetic field in an axial direction, the first core (30) includes a first protrusion (35) extending in a radial direction, the second core (40) includes a second protrusion (45) extending in the axial direction and facing the first protrusion (35), and the magnetic gap is provided between the first protrusion (35) and the second protrusion (45).

According to the seventh aspect, a magnetic flux is allowed to flow in an in-plane direction of the magnetic working substances (11).

An eighth aspect of the present disclosure is an embodiment of the magnetic refrigerator of any one of the third to seventh aspects. In the eighth aspect, the magnetic working substances (11) are disposed at a position with the minimum magnetic resistance between the first protrusion (35) and the second protrusion (45).

According to the eighth aspect, leakage of the magnetic flux between the first protrusion (35) and the second protrusion (45) can be reduced.

A ninth aspect of the present disclosure is an embodiment of the magnetic refrigerator of any one of the third to seventh aspects. In the ninth aspect, the magnetic working substances (11) are disposed to face distal ends of the first protrusion (35) and the second protrusion (45).

According to the ninth aspect, a magnetic path is shortened, thereby making it possible to downsize the entire magnetic refrigerator and improve the magnetic flux density.

A tenth aspect of the present disclosure is directed to a refrigeration apparatus including: the magnetic refrigerator (10) of any one of the first to ninth aspects; and a heating medium circuit (2) configured to exchange heat with the magnetic refrigerator (10).

According to the tenth aspect, the refrigeration apparatus including the magnetic refrigerator (10) can be provided.

### BRIEF DESCRIPTION OF THE DRAWINGS

FIG. 1 is a piping system diagram of a refrigeration apparatus of a first embodiment.
FIG. 2 is a perspective view illustrating the configuration of a magnetic refrigerator.
FIG. 3 is an exploded perspective view illustrating the configuration of the magnetic refrigerator.
FIG. 4 is a plan view illustrating the configuration of the magnetic refrigerator.
FIG. 5 is a cross-sectional view taken along line A-A in FIG. 4 and viewed in the direction of arrows.
FIG. 6 is a plan view illustrating a variation of the first embodiment.
FIG. 7 is a cross-sectional view taken along line B-B in FIG. 6 and viewed in the direction of arrows.
FIG. 8 is a perspective view illustrating the configuration of a magnetic refrigerator of a second embodiment.
FIG. 9 is an exploded perspective view illustrating the configuration of the magnetic refrigerator.
FIG. 10 is a plan view illustrating the configuration of the magnetic refrigerator.
FIG. 11 is a cross-sectional view taken along line C-C shown in FIG. 10 and viewed in the direction of arrows.
FIG. 12 is a side cross-sectional view illustrating a variation of the second embodiment.
FIG. 13 is a plan view illustrating the configuration of a magnetic refrigerator of a third embodiment.
FIG. 14 is a cross-sectional view taken along line D-D in FIG. 13 and viewed in the direction of arrows.
FIG. 15 is a side cross-sectional view illustrating a variation of the third embodiment.
FIG. 16 is a plan view illustrating the configuration of a magnetic refrigerator of a fourth embodiment.
FIG. 17 is a cross-sectional view taken along line E-E in FIG. 16 and viewed in the direction of arrows.
FIG. 18 is a side cross-sectional view illustrating a variation of the fourth embodiment.
FIG. 19 is an exploded perspective view illustrating the configuration of a magnetic refrigerator of a fifth embodiment.
FIG. 20 is a plan view illustrating the configuration of the magnetic refrigerator.
FIG. 21 is a cross-sectional view taken along line F-F in FIG. 20 and viewed in the direction of arrows.
FIG. 22 is a side cross-sectional view illustrating a variation of the fifth embodiment.
FIG. 23 is an exploded perspective view illustrating the configuration of a magnetic refrigerator of a sixth embodiment.
FIG. 24 is a plan view illustrating the configuration of the magnetic refrigerator.
FIG. 25 is a cross-sectional view taken along line G-G in FIG. 24 and viewed in the direction of arrows.
FIG. 26 is a plan view illustrating the configuration of a magnetic refrigerator of a seventh embodiment.
FIG. 27 is a cross-sectional view taken along line H-H in FIG. 26 and viewed in the direction of arrows.
FIG. 28 is a plan view illustrating the configuration of a magnetic refrigerator of an eighth embodiment.
FIG. 29 is a cross-sectional view taken along line I-I in FIG. 28 and viewed in the direction of arrows.
FIG. 30 is a plan view illustrating the configuration of a magnetic refrigerator of a ninth embodiment.
FIG. 31 is a cross-sectional view taken along line J-J in FIG. 30 and viewed in the direction of arrows.

### DESCRIPTION OF EMBODIMENTS

### «First Embodiment»

A first embodiment will be described below.

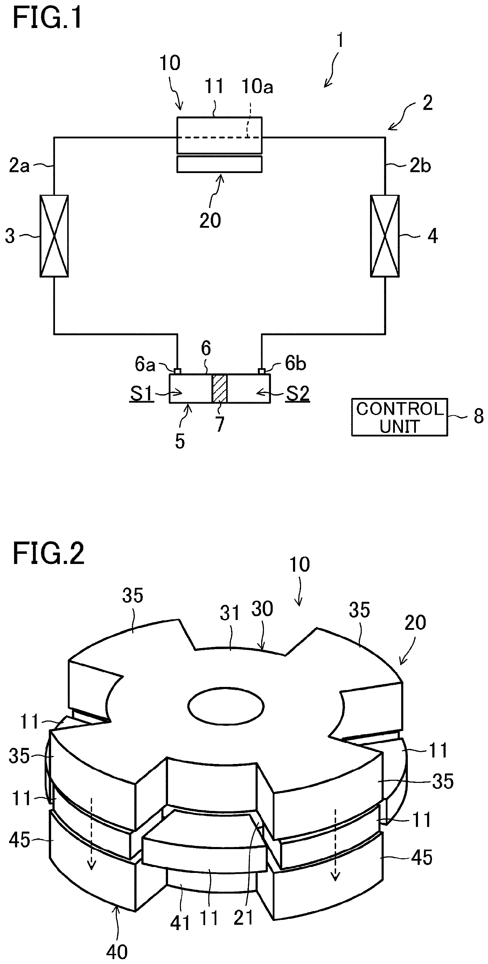

As illustrated in FIG. 1, a refrigeration apparatus (1) includes a heating medium circuit (2). The refrigeration apparatus (1) is applied to, for example, an air conditioner. The heating medium circuit (2) is filled with a heating medium. Examples of the heating medium include a refrigerant, water, and brine, for example.

The refrigeration apparatus (1) includes a low-temperature heat exchanger (3), a high-temperature heat exchanger (4), a pump (5), and a magnetic refrigerator (10). The magnetic refrigerator (10) controls the temperature of the heating medium using a magnetocaloric effect.

The heating medium circuit (2) is a closed loop circuit. The pump (5), the low-temperature heat exchanger (3), the magnetic refrigerator (10), and the high-temperature heat exchanger (4) are sequentially connected to the heating medium circuit (2).

The heating medium circuit (2) includes a low-temperature channel (2a) and a high-temperature channel (2b). The low-temperature channel (2a) connects a temperature control channel (10a) of the magnetic refrigerator (10) and a first port (6a) of the pump (5). The high-temperature channel (2b) connects the temperature control channel (10a) of the magnetic refrigerator (10) and a second port (6b) of the pump (5).

### <Low-Temperature Heat Exchanger and High-Temperature Heat Exchanger>

The low-temperature heat exchanger (3) exchanges heat between the heating medium cooled by the magnetic refrigerator (10) and a predetermined target to be cooled (e.g., a secondary refrigerant or air). The high-temperature heat exchanger (4) exchanges heat between the heating medium heated by the magnetic refrigerator (10) and a predetermined target to be heated (e.g., a secondary refrigerant or air).

### <Pump>

The pump (5) alternately repeats a first action and a second action. The first action conveys the heating medium in the heating medium circuit (2) to the left in FIG. 1. The second action conveys the heating medium in the heating medium circuit (2) to the right in FIG. 1. The pump (5) constitutes a conveying mechanism that causes the heating medium in the heating medium circuit (2) to flow reciprocally.

The pump (5) is constituted of a reciprocating piston pump. The pump (5) includes a pump case (6) and a piston (7).

The piston (7) is disposed to be able to move back and forth inside the pump case (6). The piston (7) divides the inside of the pump case (6) into a first chamber (S1) and a second chamber (S2). The pump case (6) has a first port (6a) and a second port (6b). The first port (6a) communicates with the first chamber (S1). The first port (6a) is connected to the low-temperature channel (2a). The second port (6b) communicates with the second chamber (S2). The second port (6b) is connected to the high-temperature channel (2b). The piston (7) is driven by a drive mechanism (not shown).

When the first action is made, the piston (7) moves toward the first port (6a). The first action reduces the volume of the first chamber (S1) and increases the volume of the second chamber (S2). As a result, the heating medium in the first chamber (S1) is discharged to the low-temperature channel (2a) through the first port (6a). Meanwhile, the heating medium in the high-temperature channel (2b) is sucked into the second chamber (S2) through the second port (6b).

When the second action is made, the piston (7) moves toward the second port (6b). The second action reduces the volume of the second chamber (S2) and increases the volume of the first chamber (S1). As a result, the heating medium in the second chamber (S2) is discharged to the high-temperature channel (2b) through the second port (6b). Meanwhile, the heating medium in the low-temperature channel (2a) is sucked into the first chamber (S 1) through the first port (6a).

### <Control Unit>

The refrigeration apparatus (1) includes a control unit (8). The control unit (8) controls the operation of the pump (5) and the magnetic refrigerator (10) according to a predetermined operation command. The control unit (8) includes a microcomputer and a memory device (specifically, a semiconductor memory) storing software for operating the microcomputer.

### <Magnetic Refrigerator>

As illustrated in FIGS. 2 to 5, the magnetic refrigerator (10) includes magnetic working substances (11), a magnetic field application unit (20), and a rotation mechanism (15).

The magnetic working substances (11) generate heat when a magnetic field is applied to the magnetic working substances (11). The magnetic working substances (11) absorb heat when the magnetic field is removed. The magnetic working substances (11) also generate heat when the intensity of the applied magnetic field increases. The magnetic working substances (11) also absorb heat when the intensity of the applied magnetic field decreases.

Examples of the material of the magnetic working substances (11) include Gd₅(Ge_{0.5}Si_{0.5})₄, La(Fe₁₋ₓSiₓ)₁₃, La(Fe₁₋ₓCoₓSi_{y})₁₃, La(Fe₁₋ₓSiₓ)₁₃Hy, and Mn(As_{0.9}Sb_{0.1}), for example.

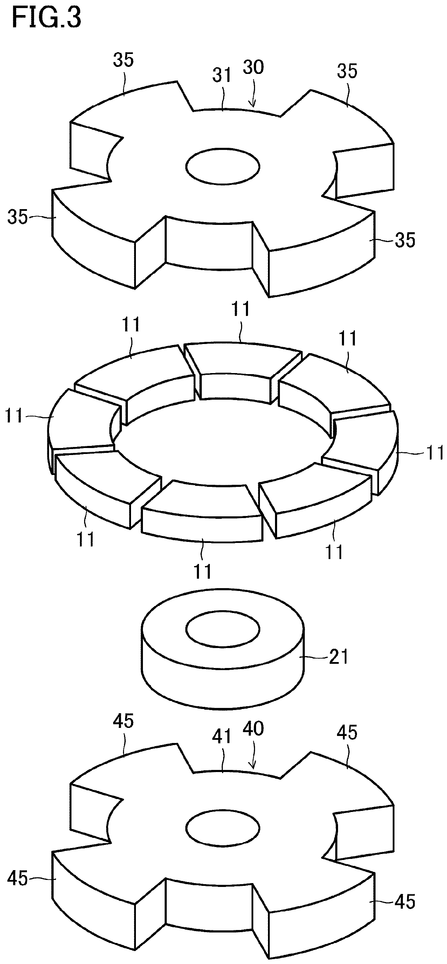

Multiple magnetic working substances (11) are arranged at predetermined first intervals in a circumferential direction. In the example shown in FIG. 3, eight magnetic working substances (11) extending in an arc shape in the circumferential direction are arranged at equal intervals in the circumferential direction.

The rotation mechanism (15) includes a shaft (16) and a motor (17). The shaft (16) is connected to the motor (17). The motor (17) rotates the shaft (16). The magnetic field application unit (20) is connected to the shaft (16).

The magnetic field application unit (20) makes a relative movement with respect to the magnetic working substances (11) in the first direction. Specifically, as the motor (17) rotates, the magnetic field application unit (20) rotates about the axis together with the shaft (16). This allows the magnetic field application unit (20) to make a relative rotational movement with respect to the magnetic working substances (11). That is, the first direction is the circumferential direction.

The magnetic field application unit (20) includes one permanent magnet (21) (a magnetic field generator), a first core (30), and a second core (40). The permanent magnet (21) is formed, for example, in a ring shape. As the permanent magnet (21), for example, an Nd-Fe-B based magnet or an SmCo based magnet can be used.

The first core (30) and the second core (40) are made of a magnetic material. The first core (30) is provided closer to one of magnetic poles of the permanent magnet (21). The second core (40) is provided closer to the other magnetic pole of the permanent magnet (21). The first core (30) and the second core (40) are spaced from each other in the axial direction. The shaft (16) is connected to central portions of the first core (30) and the second core (40).

The shaft (16) is preferably made of a non-magnetic material to avoid a short circuit between the first core (30) and the second core (40) via the shaft (16). A non-magnetic material (not shown) may be disposed between the first and second cores (30) and (40) and the shaft (16) made of a magnetic material.

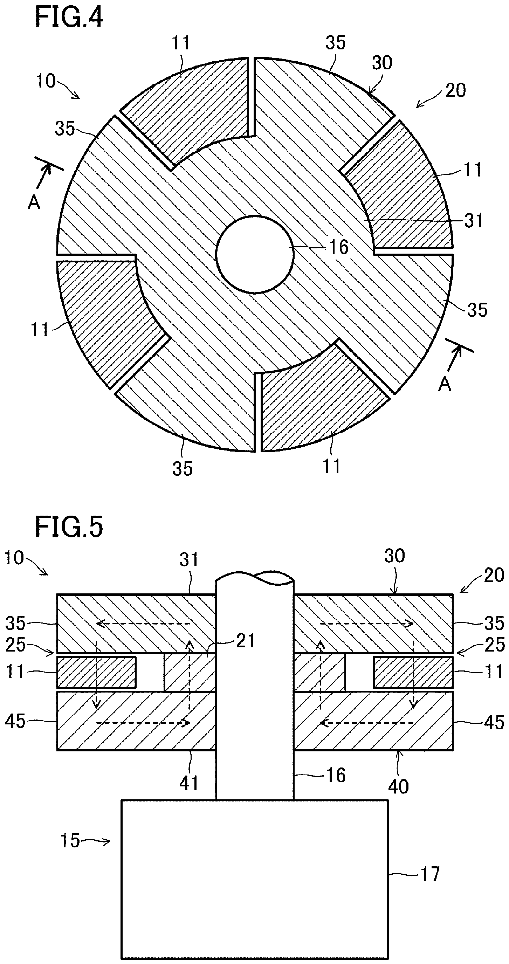

In the example shown in FIG. 5, the permanent magnet (21) is magnetized in the axial direction. The permanent magnet (21) is arranged with the N pole (an upper part in FIG. 5) closer to the first core (30) and the S pole (a lower part in FIG. 5) closer to the second core (40). The positions of the N pole and S pole of the permanent magnet (21) may be reversed.

The first core (30) includes a first disc portion (31) and first protrusions (35). The shaft (16) is coupled to the first disc portion (31). The first protrusions (35) extend radially outward from the first disc portion (31). The first protrusions (35) are arranged at predetermined second intervals in the circumferential direction. In the example shown in FIG. 4, four first protrusions (35) are arranged at equal intervals in the circumferential direction. The first protrusions (35) are axially spaced from the magnetic working substances (11). The second intervals between the first protrusions of the first core (30) are twice or more the first intervals between the magnetic working substances (11).

The second core (40) includes a second disc portion (41) and second protrusions (45). The shaft (16) is coupled to the second disc portion (41). The second protrusions (45) extend radially outward from the second disc portion (41). The second protrusions (45) are arranged at predetermined second intervals in the circumferential direction. In the example shown in FIG. 4, four second protrusions (45) are arranged at equal intervals in the circumferential direction. The second protrusions (45) are axially spaced from the magnetic working substances (11). The second intervals between the second protrusions of the second core (40) are twice or more the first intervals between the magnetic working substances (11).

The first core (30) and the second core (40) are formed in the same shape when viewed from the axial direction. The first protrusions (35) and the second protrusions (45) face each other in the axial direction. The first protrusions (35) and the second protrusions (45) constitute magnetic poles (25) of the magnetic field application unit (20). Magnetic gaps are provided between the first protrusions (35) and the second protrusions (45). In the example shown in FIG. 4, four magnetic gaps are provided. The four magnetic gaps are arranged to apply a magnetic field to different magnetic working substances (11). The magnetic working substances (11) are disposed between the first protrusions (35) and the second protrusions (45).

When the first protrusions (35) and the second protrusions (45) are opposed to the magnetic working substances (11) in the axial direction, a magnetic flux flows in the axial direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the axial direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

Thereafter, the magnetic field application unit (20) is rotated so that the first protrusion (35) and the second protrusion (45) face an adjacent one of the magnetic working substances (11) in the axial direction. As a result, the magnetic working substance (11) to which the magnetic field is first applied absorbs heat when the magnetic field is removed from the magnetic working substance (11). On the other hand, the adjacent magnetic working substance (11) to which the magnetic field is applied generates heat.

### -Operation of Refrigeration Apparatus-

Basic operation of the refrigeration apparatus (1) will be described with reference to FIG. 1. The refrigeration apparatus (1) alternately repeats a heating action and a cooling action. The heating action and the cooling action are switched in, for example, about 0.1 second to 1 second cycles.

### <Heating Action>

In the heating action, the pump (5) performs the first action, and the magnetic field application unit (20) performs a first magnetic field application. Specifically, in the heating action, the heating medium is discharged from the first port (6a) of the pump (5). At the same time, a magnetic field is applied to the magnetic working substances (11).

When the pump (5) discharges the heating medium in the first chamber (S1) to the low-temperature channel (2a), the heating medium in the low-temperature channel (2a) flows into the temperature control channel (10a) of the magnetic refrigerator (10). In the refrigeration apparatus (1) during the first magnetic field application, the magnetic working substances (11) radiate heat to the surroundings. Thus, the heating medium flowing through the temperature control channel (10a) is heated by the magnetic working substances (11). The heating medium heated in the temperature control channel (10a) flows into the high-temperature channel (2b) and flows through the high-temperature heat exchanger (4). The high-temperature heating medium in the high-temperature heat exchanger (4) heats a predetermined target to be heated (e.g., a secondary refrigerant or air). The heating medium in the high-temperature channel (2b) is sucked into the second chamber (S2) through the second port (6b) of the pump (5).

### <Cooling Action>

In the cooling action, the pump (5) performs the second action, and the magnetic field application unit (20) performs a second magnetic field application. Specifically, in the heating action, the heating medium is discharged from the second port (6b) of the pump (5), and simultaneously, the magnetic field is removed from the magnetic working substances (11).

When the pump (5) discharges the heating medium in the second chamber (S2) to the high-temperature channel (2b), the heating medium in the high-temperature channel (2b) flows into the temperature control channel (10a) of the magnetic refrigerator (10). In the refrigeration apparatus (1) during the second magnetic field application, the magnetic working substances (11) absorb heat from the surroundings. Thus, the heating medium flowing through the temperature control channel (10a) is cooled by the magnetic working substances (11). The heating medium cooled in the temperature control channel (10a) flows into the low-temperature channel (2a) and flows through the low-temperature heat exchanger (3). The low-temperature heating medium in the low-temperature heat exchanger (3) cools a predetermined target to be cooled (e.g., a secondary refrigerant or air). The heating medium in the low-temperature channel (2a) is sucked into the first chamber (S1) through the first port (6a) of the pump (5).

### -Advantages of First Embodiment-

According to the features of this embodiment, the magnetic working substances (11) are arranged at the first intervals in the first direction. The magnetic field application unit (20) makes a relative movement with respect to the magnetic working substances (11) in the first direction. The magnetic field application unit (20) includes one magnetic field generator (21), the first core (30), and the second core (40). The first core (30) is provided closer to one of the magnetic poles of the magnetic field generator (21). The second core (40) is provided closer to the other magnetic pole of the magnetic field generator (21). Three or more magnetic gaps are provided between the first core (30) and the second core (40) and are arranged at second intervals that are twice or more the first intervals in the first direction.

This can increase the number of poles without increasing the number of permanent magnets (21) used as the magnetic field generator (21), reducing the size of the magnetic refrigerator and the number of assembling steps.

According to the features of this embodiment, the relative movement is a relative rotational movement about a predetermined axis, and the first direction is the circumferential direction.

This can provide the magnetic refrigerator that allows the magnetic field application unit (20) to make the rotational movement relative to the magnetic working substances (11).

According to the features of this embodiment, the magnetic field generator (21) is configured to generate a magnetic field in the axial direction. The first core (30) has the first protrusions (35) extending in the radial direction. The second core (40) has the second protrusions (45) extending in the radial direction and facing the first protrusions (35). The magnetic gaps are provided between the first protrusions (35) and the second protrusions (45).

This allows a magnetic flux to flow in the axial direction of the magnetic working substances (11).

According to the features of this embodiment, the magnetic working substances (11) are disposed at a position with the minimum magnetic resistance between the first protrusions (35) and the second protrusions (45).

This can reduce leakage of the magnetic flux between the first protrusions (35) and the second protrusions (45).

According to the features of this embodiment, the refrigeration apparatus includes the magnetic refrigerator (10) and the heating medium circuit (2) that exchanges heat with the magnetic refrigerator (10).

This can provide the refrigeration apparatus (1) including the magnetic refrigerator (10).

### -Variation of First Embodiment-

The permanent magnet (21) of the first embodiment may be magnetized in the radial direction.

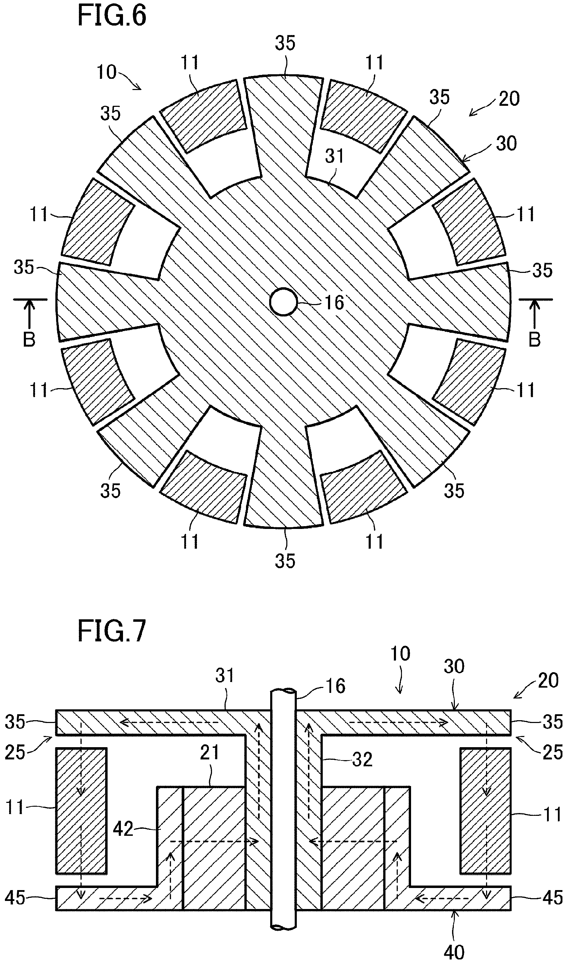

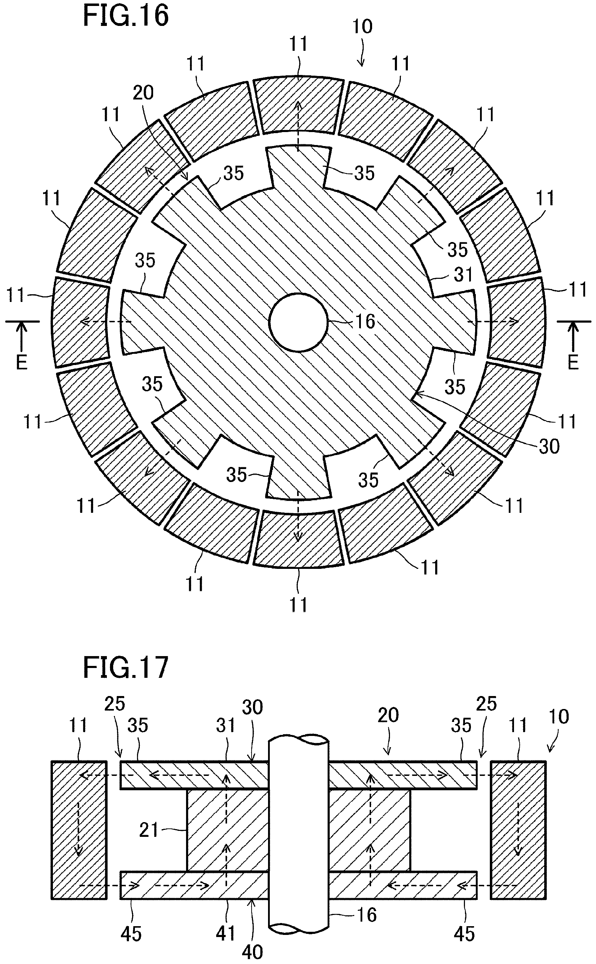

As illustrated in FIGS. 6 and 7, the magnetic working substances (11) may be arranged at predetermined first intervals in the circumferential direction. In the example shown in FIG. 6, 16 magnetic working substances (11) are arranged at equal intervals in the circumferential direction.

The magnetic field application unit (20) includes one permanent magnet (21), a first core (30), and a second core (40). The permanent magnet (21) is formed, for example, in a ring shape.

The first core (30) includes a first disc portion (31), a first cylindrical portion (32), and first protrusions (35). A shaft (16) is coupled to the first cylindrical portion (32). The first disc portion (31) is provided at an upper end of the first cylindrical portion (32) in FIG. 7. The first protrusions (35) extend radially outward from the first disc portion (31). The first protrusions (35) are arranged at predetermined second intervals in the circumferential direction.

In the example shown in FIG. 6, eight first protrusions (35) are arranged at equal intervals in the circumferential direction. The first protrusions (35) are axially spaced from the magnetic working substances (11). The second intervals between the first protrusions of the first core (30) are twice or more the first intervals between the magnetic working substances (11).

The second core (40) includes a second cylindrical portion (42) and second protrusions (45). The second cylindrical portion (42) has an inner diameter greater than the outer diameter of the first cylindrical portion (32). The first cylindrical portion (32) is disposed inside the second cylindrical portion (42). The permanent magnet (21) is sandwiched between the first cylindrical portion (32) and the second cylindrical portion (42).

The second protrusions (45) extend radially outward from a lower end of the second cylindrical portion (42) in FIG. 7. The second protrusions (45) are arranged at predetermined second intervals in the circumferential direction. In the example shown in FIG. 6, eight second protrusions (45) are arranged at equal intervals in the circumferential direction. The second protrusions (45) are axially spaced from the magnetic working substances (11). The second intervals between the second protrusions of the second core (40) are twice or more the second intervals between the magnetic working substances (11).

In the example shown in FIG. 7, the permanent magnet (21) is magnetized in the radial direction. The permanent magnet (21) is arranged with the N pole (a radially inside part in FIG. 7) closer to the first core (30) and the S pole (a radially outside part in FIG. 7) closer to the second core (40). The positions of the N pole and S pole of the permanent magnet (21) may be reversed.

The first protrusions (35) and the second protrusions (45) face each other in the axial direction. The first protrusions (35) and the second protrusions (45) constitute magnetic poles (25) of the magnetic field application unit (20). Magnetic gaps are provided between the first protrusions (35) and the second protrusions (45). In the example shown in FIG. 6, eight magnetic gaps are provided. The magnetic working substances (11) are disposed between the first protrusions (35) and the second protrusions (45).

When the first protrusions (35) and the second protrusions (45) are opposed to the magnetic working substances (11) in the axial direction, a magnetic flux flows in the axial direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the axial direction from the first protrusion (35) toward the second protrusion (45). The magnetic flux flows from the second protrusion of the second core (40) toward the permanent magnet (21). Thus, the magnetic working substance (11) to which the magnetic field is applied generates heat. Even if the shaft (16) is made of a magnetic material, the magnetic flux of the permanent magnet (21) does not leak.

### «Second Embodiment»

A second embodiment will be described below.

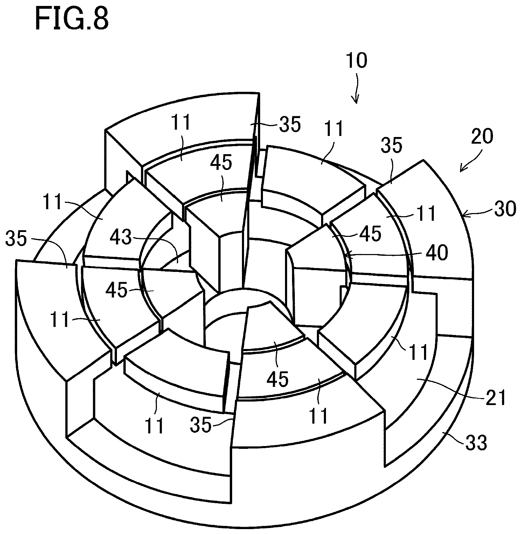

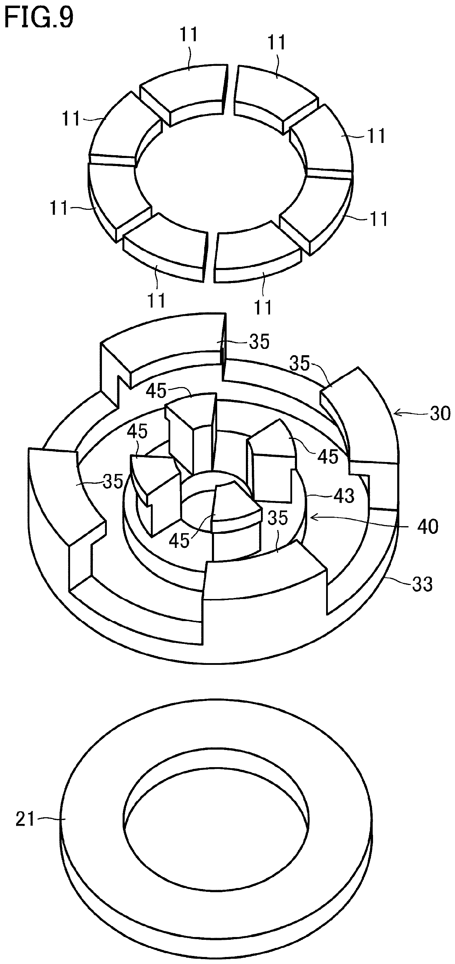

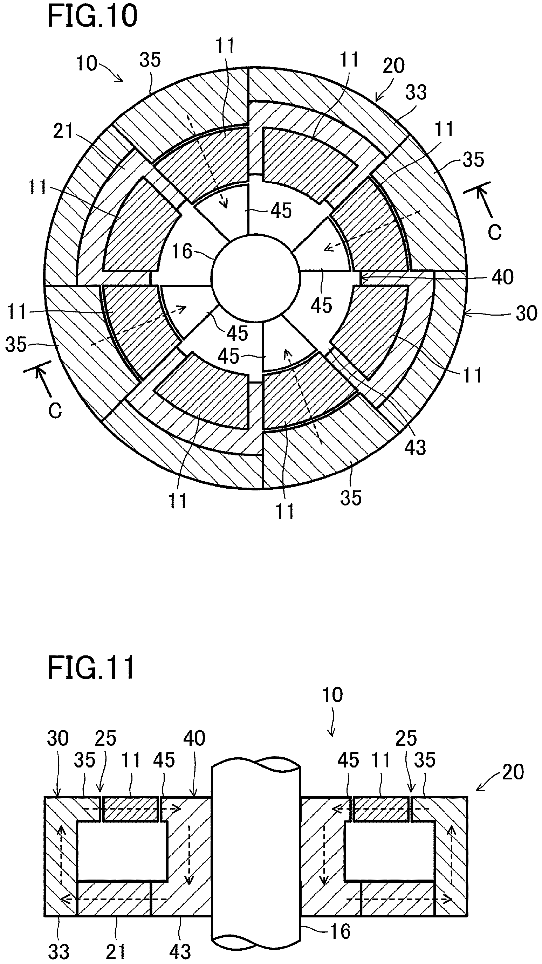

As illustrated in FIGS. 8 to 11, multiple magnetic working substances (11) are arranged at predetermined first intervals in the circumferential direction. In the example shown in FIG. 10, eight magnetic working substances (11) extending in an arc shape in the circumferential direction are arranged at equal intervals in the circumferential direction.

The magnetic field application unit (20) includes one permanent magnet (21), a first core (30), and a second core (40). The permanent magnet (21) is formed, for example, in a ring shape.

The first core (30) includes a first ring portion (33) and first protrusions (35). Each of the first protrusions (35) protrudes from an upper surface of the first ring portion (33) in FIG. 11 to extend in the axial direction (upward) from its proximal end and then extends inward in a radial direction to its distal end. The first protrusions (35) are arranged at predetermined second intervals in the circumferential direction of the first ring portion (33). In the example shown in FIG. 10, four first protrusions (35) are arranged at equal intervals in the circumferential direction. The first protrusions (35) are radially spaced from the magnetic working substances (11).

The second core (40) includes a second ring portion (43) and second protrusions (45). The second ring portion (43) has an outer diameter smaller than the inner diameter of the first ring portion (33). The second ring portion (43) is disposed inside the first ring portion (33). The permanent magnet (21) is sandwiched between the first ring portion (33) and the second ring portion (43).

Each of the second protrusions (45) protrudes from an upper surface of the second ring portion (43) in FIG. 11 to extend in the axial direction (upward) from its proximal end and then extends outward in a radial direction to its distal end. The second protrusions (45) are arranged at predetermined second intervals in the circumferential direction of the second ring portion (43). In the example shown in FIG. 10, four second protrusions (45) are arranged at equal intervals in the circumferential direction. The second protrusions (45) are radially spaced from the magnetic working substances (11).

In the example shown in FIG. 11, the permanent magnet (21) is magnetized in the radial direction. The permanent magnet (21) is arranged with the N pole (a radially outside part in FIG. 11) closer to the first core (30) and the S pole (a radially inside part in FIG. 11) closer to the second core (40). The positions of the N pole and S pole of the permanent magnet (21) may be reversed.

The distal ends of the first protrusion (35) and the second protrusion (45) face each other in the radial direction. The first protrusions (35) and the second protrusions (45) constitute magnetic poles (25) of the magnetic field application unit (20). Magnetic gaps are provided between the first protrusions (35) and the second protrusions (45). In the example shown in FIG. 10, four magnetic gaps are provided. The magnetic working substances (11) are disposed between the first protrusions (35) and the second protrusions (45).

When the first protrusions (35) and the second protrusions (45) are opposed to the magnetic working substances (11) in the radial direction, a magnetic flux flows in the radial direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the radial direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### -Advantages of Second Embodiment-

According to the features of this embodiment, the magnetic field generator (21) is configured to generate a magnetic field in the radial direction. The first core (30) has the first protrusions (35) extending in the radial direction. The second core (40) has the second protrusions (45) extending in the radial direction and facing the first protrusions (35). The magnetic gaps are provided between the first protrusions (35) and the second protrusions (45) where the magnetic resistance is smaller than elsewhere.

This allows a magnetic flux to flow in the axial direction of the magnetic working substances (11).

### -Variation of Second Embodiment-

In the second embodiment, each of the first protrusions (35) and the second protrusions (45) may have a distal end portion extending in the axial direction.

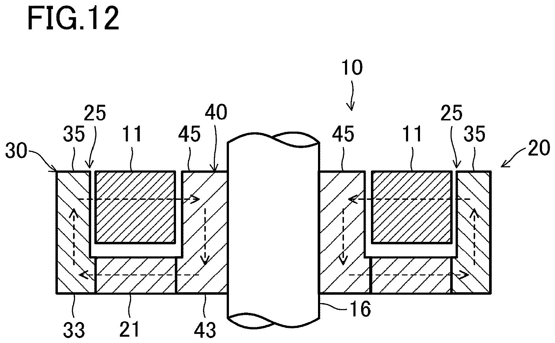

As illustrated in FIG. 12, the first core (30) includes a first ring portion (33) and first protrusions (35). The first protrusions (35) extend in the axial direction (upward) from the upper surface of the first ring portion (33) in FIG. 12. The first protrusions (35) are arranged at predetermined second intervals in the circumferential direction of the first ring portion (33).

The second core (40) includes a second ring portion (43) and second protrusions (45). The second ring portion (43) has an outer diameter smaller than the inner diameter of the first ring portion (33). The second ring portion (43) is disposed inside the first ring portion (33). The permanent magnet (21) is sandwiched between the first ring portion (33) and the second ring portion (43).

The second protrusions (45) extend in the axial direction (upward) from the upper surface of the second ring portion (43) in FIG. 12. The second protrusions (45) are arranged at predetermined second intervals in the circumferential direction of the second ring portion (43).

In the example shown in FIG. 12, the permanent magnet (21) is magnetized in the radial direction. The permanent magnet (21) is arranged with the N pole (a radially outside part in FIG. 12) closer to the first core (30) and the S pole (a radially inside part in FIG. 12) closer to the second core (40). The positions of the N pole and S pole of the permanent magnet (21) may be reversed.

The distal ends of the first core (30) and the second core (40) face each other in the radial direction. The first protrusions (35) and the second protrusions (45) constitute magnetic poles (25) of the magnetic field application unit (20). Magnetic gaps are provided between the first protrusions (35) and the second protrusions (45). The magnetic working substances (11) are disposed between the first protrusions (35) and the second protrusions (45).

When the first protrusions (35) and the second protrusions (45) are opposed to the magnetic working substances (11) in the radial direction, a magnetic flux flows in the radial direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the radial direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### -Advantages of Variation of Second Embodiment-

According to the features of this embodiment, the magnetic field generator (21) is configured to generate a magnetic field in the radial direction. The first core (30) has the first protrusions extending in the axial direction. The second core (40) has the second protrusions (45) extending in the axial direction and facing the first protrusions (35). The magnetic gaps are provided between the first protrusions (35) and the second protrusions (45).

This allows a magnetic flux to flow in the radial direction of the magnetic working substances (11).

### «Third Embodiment»

A third embodiment will be described below.

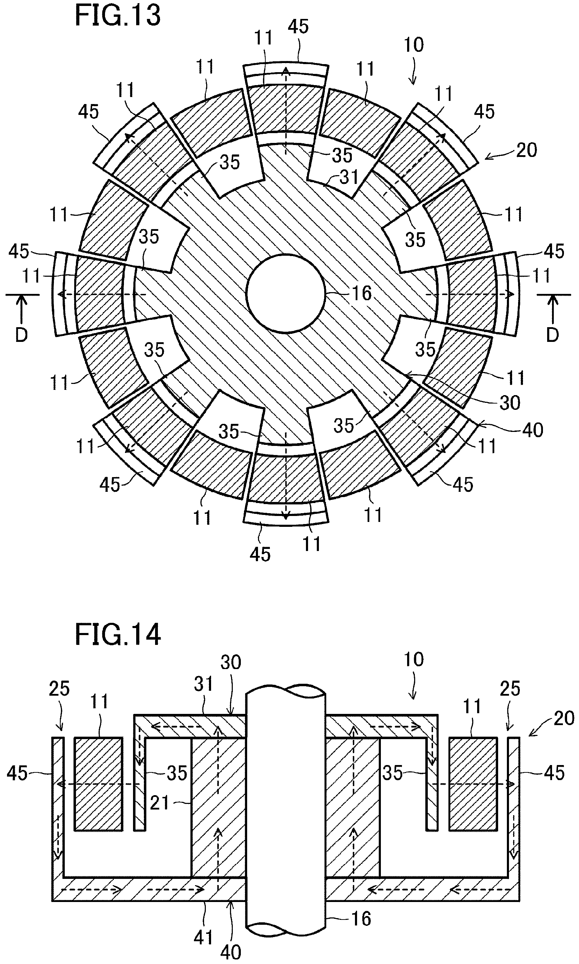

As illustrated in FIGS. 13 to 14, multiple magnetic working substances (11) are arranged at predetermined first intervals in the circumferential direction. In the example shown in FIG. 13, 16 magnetic working substances (11) extending in an arc shape in the circumferential direction are arranged at equal intervals in the circumferential direction.

The magnetic field application unit (20) includes one permanent magnet (21), a first core (30), and a second core (40). The permanent magnet (21) is formed in, for example, a cylindrical shape.

The first core (30) includes a first disc portion (31) and first protrusions (35). The shaft (16) is coupled to the first disc portion (31). Each of the first protrusions (35) protrudes from the first disc portion (31) to extend radially outward from its proximal end and then extends in the axial direction (downward in FIG. 14) to its distal end. The first protrusions (35) are arranged at predetermined second intervals in the circumferential direction. In the example shown in FIG. 13, eight first protrusions (35) are arranged at equal intervals in the circumferential direction.

The second core (40) includes a second disc portion (41) and second protrusions (45). The shaft (16) is coupled to the second disc portion (41). The permanent magnet (21) is sandwiched between the first disc portion (31) and the second disc portion (41).

Each of the second protrusions (45) protrudes from the second disc portion (41) to extend radially outward from its proximal end and then extends in the axial direction (upward in FIG. 14) to its distal end. The second protrusions (45) are arranged at predetermined second intervals in the circumferential direction. In the example shown in FIG. 13, eight second protrusions (45) are arranged at equal intervals in the circumferential direction.

In the example shown in FIG. 14, the permanent magnet (21) is magnetized in the axial direction. The permanent magnet (21) is arranged with the N pole (an upper part in FIG. 14) closer to the first core (30) and the S pole (a lower part in FIG. 14) closer to the second core (40). The positions of the N pole and S pole of the permanent magnet (21) may be reversed.

The distal ends of the first protrusion (35) and the second protrusion (45) face each other in the radial direction. The first protrusions (35) and the second protrusions (45) constitute magnetic poles (25) of the magnetic field application unit (20). Magnetic gaps are provided between the first protrusions (35) and the second protrusions (45). In the example shown in FIG. 13, eight magnetic gaps are provided. The magnetic working substances (11) are disposed between the first protrusions (35) and the second protrusions (45).

When the first protrusions (35) and the second protrusions (45) are opposed to the magnetic working substances (11) in the radial direction, a magnetic flux flows in the radial direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the radial direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### -Advantages of Third Embodiment-

According to the features of this embodiment, the magnetic field generator (21) is configured to generate a magnetic field in the axial direction. The first core (30) has the first protrusions (35) extending in the axial direction. The second core (40) has the second protrusions (45) extending in the axial direction and facing the first protrusions (35). The magnetic gaps are provided between the first protrusions (35) and the second protrusions (45).

This allows a magnetic flux to flow in the radial direction of the magnetic working substances (11).

### -Variation of Third Embodiment-

The permanent magnet (21) of the third embodiment may be magnetized in the radial direction.

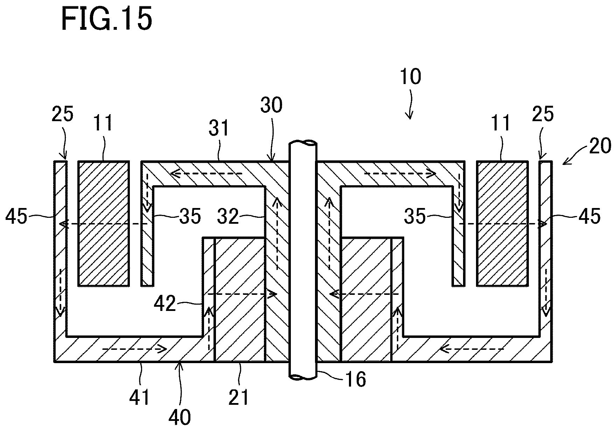

As illustrated in FIG. 15, the first core (30) includes a first disc portion (31), a first cylindrical portion (32), and first protrusions (35). A shaft (16) is coupled to the first cylindrical portion (32). The first disc portion (31) is provided at an upper end of the first cylindrical portion (32) in FIG. 15.

Each of the first protrusions (35) protrudes from the first disc portion (31) to extend radially outward from its proximal end and then extends in the axial direction (downward in FIG. 15) to its distal end. The first protrusions (35) are arranged at predetermined second intervals in the circumferential direction. The first protrusions (35) are radially spaced from the magnetic working substances (11).

The second core (40) includes a second disc portion (41), a second cylindrical portion (42), and second protrusions (45). The second cylindrical portion (42) has an inner diameter greater than the outer diameter of the first cylindrical portion (32). The first cylindrical portion (32) is disposed inside the second cylindrical portion (42). The permanent magnet (21) is sandwiched between the first cylindrical portion (32) and the second cylindrical portion (42).

Each of the second protrusions (45) protrudes from a lower end of the second cylindrical portion (42) in FIG. 15 to extend radially outward from its proximal end and then extends in the axial direction (upward in FIG. 15) to its distal end. The second protrusions (45) are arranged at predetermined second intervals in the circumferential direction. The second protrusions (45) are axially spaced from the magnetic working substances (11).

In the example shown in FIG. 15, the permanent magnet (21) is magnetized in the radial direction. The permanent magnet (21) is arranged with the N pole (a radially inside part in FIG. 15) closer to the first core (30) and the S pole (a radially outside part in FIG. 15) closer to the second core (40). The positions of the N pole and S pole of the permanent magnet (21) may be reversed.

The distal ends of the first protrusion (35) and the second protrusion (45) face each other in the radial direction. The first protrusions (35) and the second protrusions (45) constitute magnetic poles (25) of the magnetic field application unit (20). Magnetic gaps are provided between the first protrusions (35) and the second protrusions (45). The magnetic working substances (11) are disposed between the first protrusions (35) and the second protrusions (45).

When the first protrusions (35) and the second protrusions (45) are opposed to the magnetic working substances (11) in the radial direction, a magnetic flux flows in the radial direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the radial direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### «Fourth Embodiment»

A fourth embodiment will be described below.

As illustrated in FIGS. 16 and 17, multiple magnetic working substances (11) are arranged at predetermined first intervals in the circumferential direction. In the example shown in FIG. 16, 16 magnetic working substances (11) extending in an arc shape in the circumferential direction are arranged at equal intervals in the circumferential direction.

The magnetic field application unit (20) includes one permanent magnet (21), a first core (30), and a second core (40). The permanent magnet (21) is formed, for example, in a ring shape.

The first core (30) includes a first disc portion (31) and first protrusions (35). The first protrusions (35) extend radially outward from the first disc portion (31). The first protrusions (35) are arranged at predetermined second intervals in the circumferential direction. In the example shown in FIG. 16, eight first protrusions (35) are arranged at equal intervals in the circumferential direction. The first protrusions (35) are spaced radially inward from the magnetic working substances (11).

The second core (40) includes a second disc portion (41) and second protrusions (45). The second protrusions (45) extend radially outward from the second disc portion (41). The second protrusions (45) are arranged at predetermined second intervals in the circumferential direction. In the example shown in FIG. 16, eight second protrusions (45) are arranged at equal intervals in the circumferential direction. The second protrusions (45) are spaced radially inward from the magnetic working substances (11). The permanent magnet (21) is sandwiched between the first disc portion (31) and the second disc portion (41).

In the example shown in FIG. 17, the permanent magnet (21) is magnetized in the axial direction. The permanent magnet (21) is arranged with the N pole (an upper part in FIG. 17) closer to the first core (30) and the S pole (a lower part in FIG. 17) closer to the second core (40). The positions of the N pole and S pole of the permanent magnet (21) may be reversed.

The distal ends of the first protrusion (35) and the second protrusion (45) face each other in the axial direction. The first protrusions (35) and the second protrusions (45) constitute magnetic poles (25) of the magnetic field application unit (20). Magnetic gaps are provided between the first protrusions (35) and the second protrusions (45). In the example shown in FIG. 16, eight magnetic gaps are provided. The magnetic working substance (11) is disposed radially outward of the first protrusion (35) and the second protrusion (45).

When the first protrusions (35) and the second protrusions (45) are opposed to the magnetic working substances (11) in the radial direction, a magnetic flux flows in the axial direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the axial direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### -Advantages of Fourth Embodiment-

According to the features of this embodiment, the magnetic working substance (11) is disposed to face the distal ends of the first protrusion (35) and the second protrusion (45).

This shortens the magnetic path, thereby making it possible to downsize the entire apparatus and improve the magnetic flux density. Further, the magnetic working substance (11) is not surrounded by the first protrusion (35) and the second protrusion (45), allowing the heating medium to be easily taken in and out of the magnetic working substance (11).

### -Variation of Fourth Embodiment-

The permanent magnet (21) of the fourth embodiment may be magnetized in the radial direction.

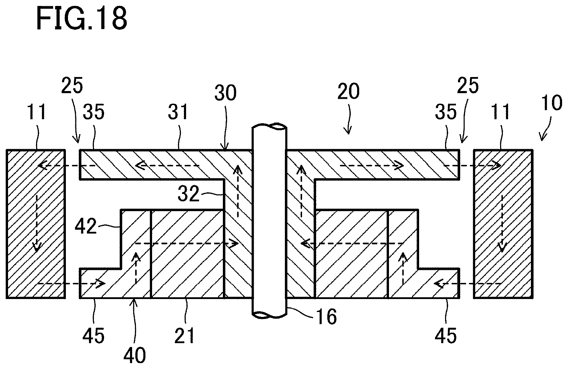

As illustrated in FIG. 18, the first core (30) includes a first disc portion (31), a first cylindrical portion (32), and first protrusions (35). A shaft (16) is coupled to the first cylindrical portion (32). The first disc portion (31) is provided at an upper end of the first cylindrical portion (32) in FIG. 18. The first protrusions (35) extend radially outward from the first disc portion (31). The first protrusions (35) are arranged at predetermined second intervals in the circumferential direction. The first protrusions (35) are spaced radially inward from the magnetic working substances (11).

The second core (40) includes a second cylindrical portion (42) and second protrusions (45). The second cylindrical portion (42) has an inner diameter greater than the outer diameter of the first cylindrical portion (32). The first cylindrical portion (32) is disposed inside the second cylindrical portion (42). The permanent magnet (21) is sandwiched between the first cylindrical portion (32) and the second cylindrical portion (42).

The second protrusions (45) extend radially outward from a lower end of the second cylindrical portion (42) in FIG. 18. The second protrusions (45) are arranged at predetermined second intervals in the circumferential direction. The second protrusions (45) are spaced radially inward from the magnetic working substances (11).

In the example shown in FIG. 18, the permanent magnet (21) is magnetized in the radial direction. The permanent magnet (21) is arranged with the N pole (a radially inside part in FIG. 18) closer to the first core (30) and the S pole (a radially outside part in FIG. 18) closer to the second core (40). The positions of the N pole and S pole of the permanent magnet (21) may be reversed.

The distal ends of the first protrusion (35) and the second protrusion (45) face each other in the axial direction. The first protrusions (35) and the second protrusions (45) constitute magnetic poles (25) of the magnetic field application unit (20). Magnetic gaps are provided between the first protrusions (35) and the second protrusions (45). The magnetic working substance (11) is disposed radially outward of the first protrusion (35) and the second protrusion (45).

When the first protrusions (35) and the second protrusions (45) are opposed to the magnetic working substances (11) in the radial direction, a magnetic flux flows in the axial direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the axial direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### «Fifth Embodiment»

A fifth embodiment will be described below.

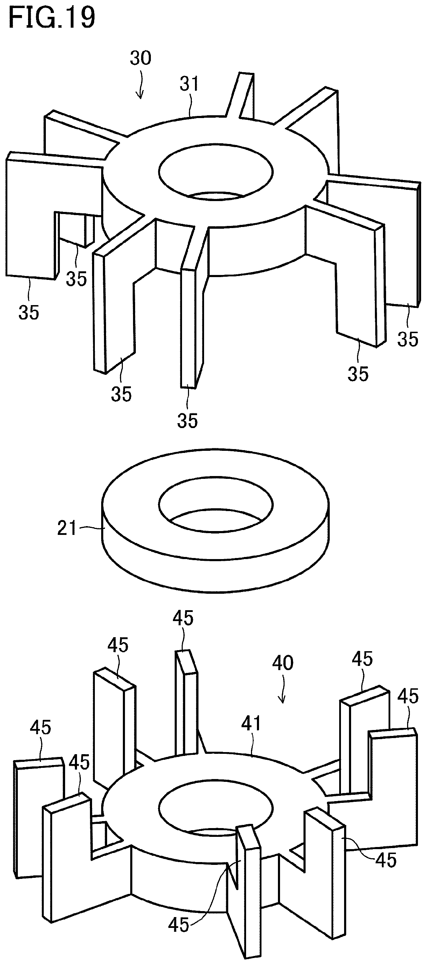

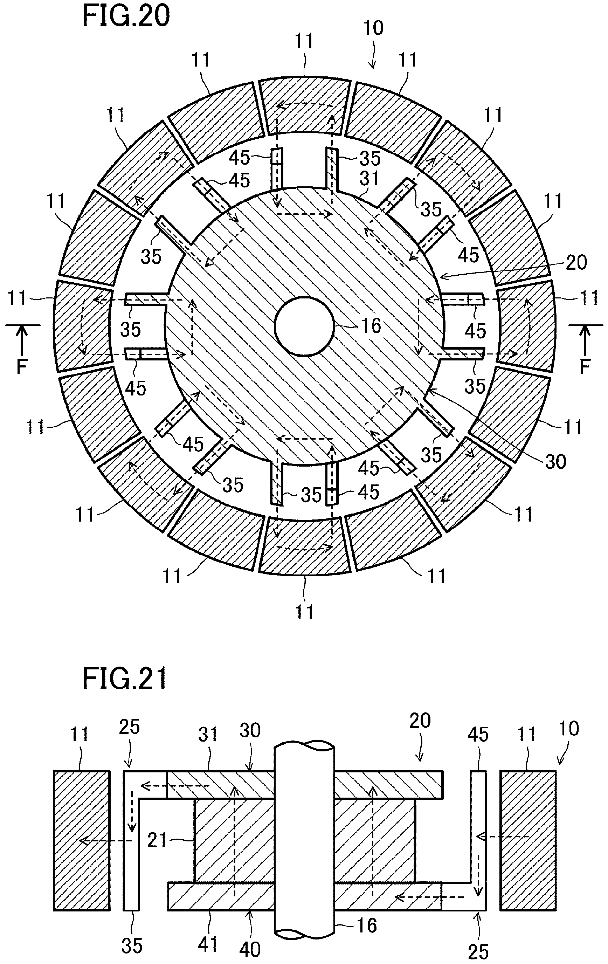

As illustrated in FIGS. 19 to 21, multiple magnetic working substances (11) are arranged at intervals in the circumferential direction. In the example shown in FIG. 20, 16 magnetic working substances (11) extending in an arc shape in the circumferential direction are arranged at equal intervals in the circumferential direction.

The magnetic field application unit (20) includes one permanent magnet (21), a first core (30), and a second core (40). The permanent magnet (21) is formed, for example, in a ring shape.

The first core (30) includes a first disc portion (31) and first protrusions (35). Each of the first protrusions (35) protrudes from the first disc portion (31) to extend radially outward from its proximal end and then extends in the axial direction (downward in FIG. 21) to its distal end. The first protrusions (35) are arranged at predetermined second intervals in the circumferential direction. In the example shown in FIG. 20, eight first protrusions (35) are arranged at equal intervals in the circumferential direction. The first protrusions (35) are spaced radially inward from the magnetic working substances (11).

The second core (40) includes a second disc portion (41) and second protrusions (45). Each of the second protrusions (45) protrudes from the second disc portion (41) to extend radially outward from its proximal end and then extends in the axial direction (upward in FIG. 21) to its distal end. The second protrusions (45) are arranged at predetermined second intervals in the circumferential direction. In the example shown in FIG. 20, eight second protrusions (45) are arranged at equal intervals in the circumferential direction. The second protrusions (45) are spaced radially inward from the magnetic working substances (11). The permanent magnet (21) is sandwiched between the first disc portion (31) and the second disc portion (41).

In the example shown in FIG. 21, the permanent magnet (21) is magnetized in the axial direction. The permanent magnet (21) is arranged with the N pole (an upper part in FIG. 21) closer to the first core (30) and the S pole (a lower part in FIG. 21) closer to the second core (40). The positions of the N pole and S pole of the permanent magnet (21) may be reversed.

The distal ends of the first protrusion (35) and the second protrusion (45) face each other in the circumferential direction. The first protrusions (35) and the second protrusions (45) constitute magnetic poles (25) of the magnetic field application unit (20). Magnetic gaps are provided between the first protrusions (35) and the second protrusions (45). In the example shown in FIG. 20, eight magnetic gaps are provided. The magnetic working substance (11) is disposed radially outward of the first protrusion (35) and the second protrusion (45).

When the first protrusions (35) and the second protrusions (45) are opposed to the magnetic working substances (11) in the radial direction, a magnetic flux flows in the circumferential direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the circumferential direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### -Variation of Fifth Embodiment-

The permanent magnet (21) of the fifth embodiment may be magnetized in the radial direction.

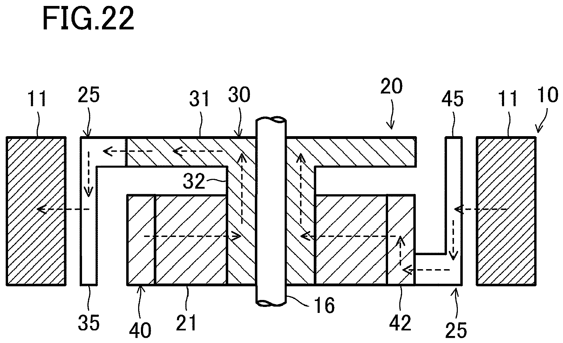

As illustrated in FIG. 22, the first core (30) includes a first disc portion (31), a first cylindrical portion (32), and first protrusions (35). A shaft (16) is coupled to the first cylindrical portion (32). The first disc portion (31) is provided at an upper end of the first cylindrical portion (32) in FIG. 22. Each of the first protrusions (35) protrudes from the first disc portion (31) to extend radially outward from its proximal end and then extends in the axial direction (downward in FIG. 22) to its distal end. The first protrusions (35) are arranged at predetermined second intervals in the circumferential direction. The first protrusions (35) are spaced radially inward from the magnetic working substances (11).

The second core (40) includes a second cylindrical portion (42) and second protrusions (45). The second cylindrical portion (42) has an inner diameter greater than the outer diameter of the first cylindrical portion (32). The first cylindrical portion (32) is disposed inside the second cylindrical portion (42). The permanent magnet (21) is sandwiched between the first cylindrical portion (32) and the second cylindrical portion (42).

Each of the second protrusions (45) protrudes from a lower end of the second cylindrical portion (42) in FIG. 22 to extend radially outward from its proximal end and then extends in the axial direction (upward in FIG. 22) to its distal end. The second protrusions (45) are arranged at predetermined second intervals in the circumferential direction. The second protrusions (45) are spaced radially inward from the magnetic working substances (11).

In the example shown in FIG. 22, the permanent magnet (21) is magnetized in the radial direction. The permanent magnet (21) is arranged with the N pole (a radially inside part in FIG. 22) closer to the first core (30) and the S pole (a radially outside part in FIG. 22) closer to the second core (40). The positions of the N pole and S pole of the permanent magnet (21) may be reversed.

The distal ends of the first protrusion (35) and the second protrusion (45) face each other in the circumferential direction. The first protrusions (35) and the second protrusions (45) constitute magnetic poles (25) of the magnetic field application unit (20). Magnetic gaps are provided between the first protrusions (35) and the second protrusions (45). The magnetic working substance (11) is disposed radially outward of the first protrusion (35) and the second protrusion (45).

When the first protrusions (35) and the second protrusions (45) are opposed to the magnetic working substances (11) in the radial direction, a magnetic flux flows in the circumferential direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the circumferential direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### «Sixth Embodiment»

A sixth embodiment will be described below.

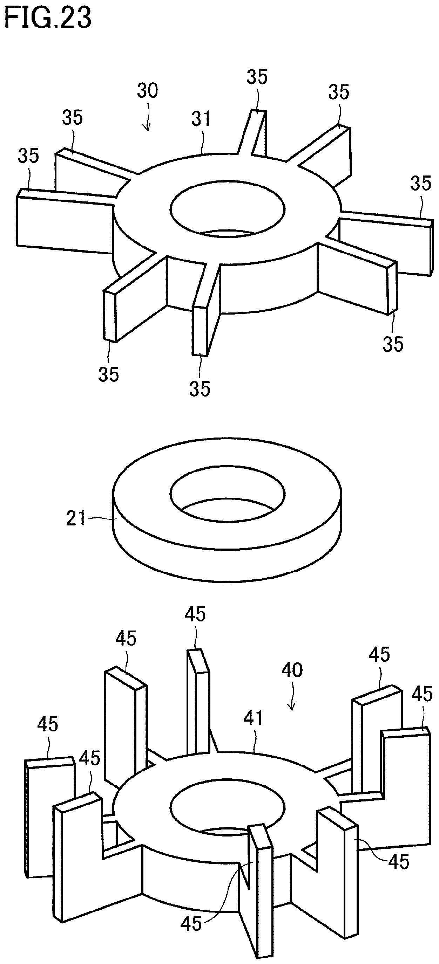

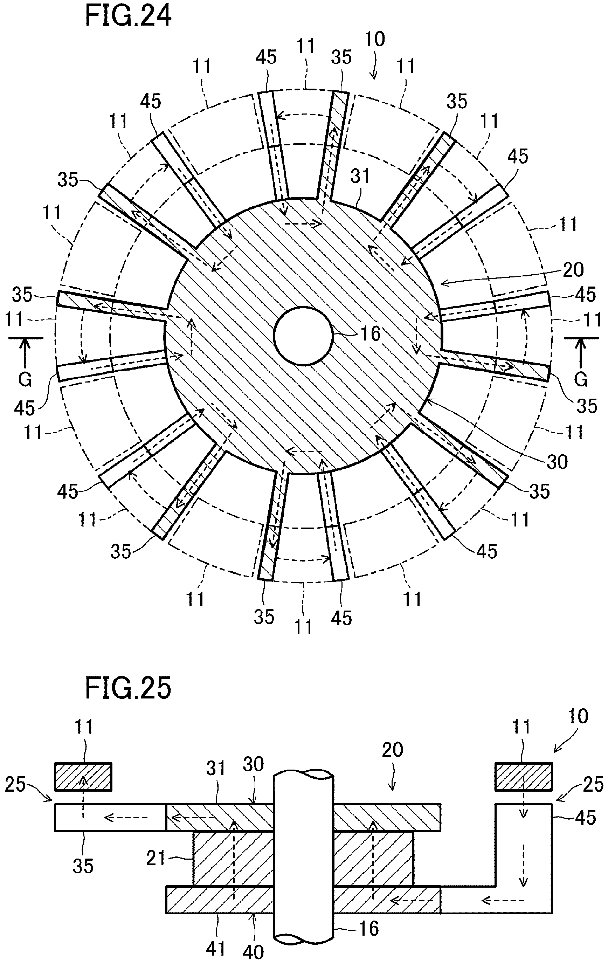

As illustrated in FIGS. 23 to 25, multiple magnetic working substances (11) are arranged at intervals in the circumferential direction. In the example shown in FIG. 24, 16 magnetic working substances (11) extending in an arc shape in the circumferential direction are arranged at equal intervals in the circumferential direction.

The magnetic field application unit (20) includes one permanent magnet (21), a first core (30), and a second core (40). The permanent magnet (21) is formed, for example, in a ring shape.

The first core (30) includes a first disc portion (31) and first protrusions (35). The first protrusions (35) extend radially outward from the first disc portion (31). The first protrusions (35) are arranged at predetermined second intervals in the circumferential direction. In the example shown in FIG. 24, eight first protrusions (35) are arranged at equal intervals in the circumferential direction. The first protrusions (35) are axially spaced from the magnetic working substances (11).

The second core (40) includes a second disc portion (41) and second protrusions (45). Each of the second protrusions (45) protrudes from the second disc portion (41) to extend radially outward from its proximal end and then extends in the axial direction (upward in FIG. 24) to its distal end. The second protrusions (45) are arranged at predetermined second intervals in the circumferential direction. In the example shown in FIG. 24, eight second protrusions (45) are arranged at equal intervals in the circumferential direction. The second protrusions (45) are axially spaced from the magnetic working substances (11). The permanent magnet (21) is sandwiched between the first disc portion (31) and the second disc portion (41).

In the example shown in FIG. 25, the permanent magnet (21) is magnetized in the axial direction. The permanent magnet (21) is arranged with the N pole (an upper part in FIG. 25) closer to the first core (30) and the S pole (a lower part in FIG. 25) closer to the second core (40). The positions of the N pole and S pole of the permanent magnet (21) may be reversed.

The distal ends of the first protrusion (35) and the second protrusion (45) face each other in the circumferential direction. The first protrusions (35) and the second protrusions (45) constitute magnetic poles (25) of the magnetic field application unit (20). Magnetic gaps are provided between the first protrusions (35) and the second protrusions (45). In the example shown in FIG. 24, eight magnetic gaps are provided. The magnetic working substance (11) is axially spaced from the first protrusion (35) and the second protrusion (45).

When the first protrusions (35) and the second protrusions (45) are opposed to the magnetic working substances (11) in the axial direction, a magnetic flux flows in the circumferential direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the circumferential direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### -Advantages of Sixth Embodiment-

According to the features of this embodiment, the magnetic field generator (21) is configured to generate a magnetic field in the axial direction. The first core (30) has the first protrusions (35) extending in the radial direction. The second core (40) has the second protrusions (45) extending in the axial direction and facing the first protrusions (35). The magnetic gaps are provided between the first protrusions (35) and the second protrusions (45).

This allows the magnetic flux to flow in an in-plane direction of the magnetic working substance (11).

### «Seventh Embodiment»

A seventh embodiment will be described below.

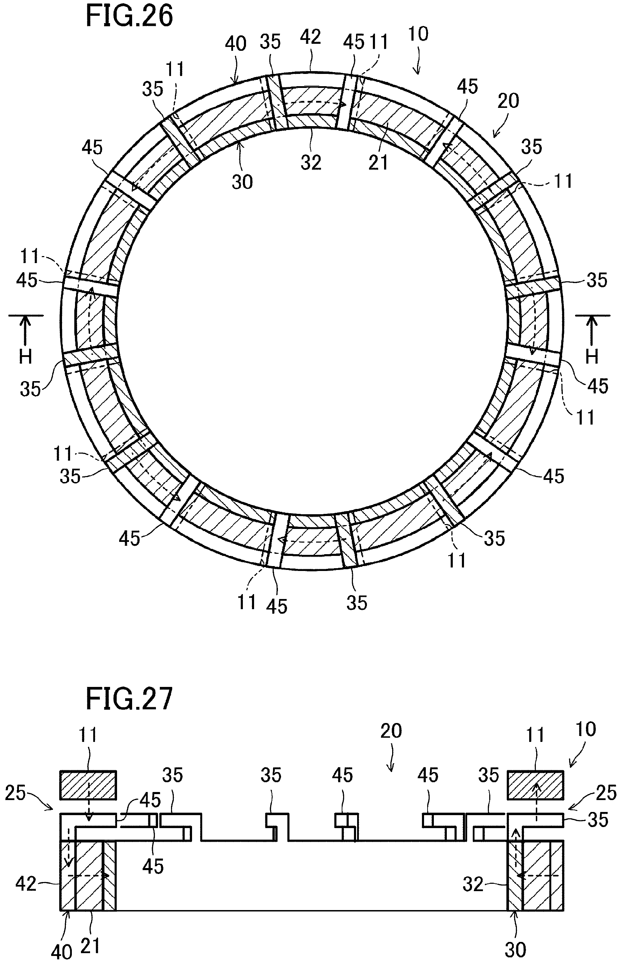

As illustrated in FIGS. 26 and 27, multiple magnetic working substances (11) are arranged at intervals in the circumferential direction. In the example shown in FIG. 26, 16 magnetic working substances (11) extending in an arc shape in the circumferential direction are arranged at equal intervals in the circumferential direction.

The magnetic field application unit (20) includes one permanent magnet (21), a first core (30), and a second core (40). The permanent magnet (21) is formed, for example, in a ring shape.

The first core (30) includes a first cylindrical portion (32) and first protrusions (35). Each of the first protrusions (35) protrudes from an upper end of the first cylindrical portion (32) in FIG. 26 to extend in the axial direction (upward) from its proximal end and then extends radially outward to its distal end. The first protrusions (35) are arranged at predetermined second intervals in the circumferential direction. In the example shown in FIG. 26, eight first protrusions (35) are arranged at equal intervals in the circumferential direction. The first protrusions (35) are axially spaced from the magnetic working substances (11).

The second core (40) includes a second cylindrical portion (42) and second protrusions (45). The second cylindrical portion (42) has an inner diameter greater than the outer diameter of the first cylindrical portion (32). The first cylindrical portion (32) is disposed inside the second cylindrical portion (42). The permanent magnet (21) is sandwiched between the first cylindrical portion (32) and the second cylindrical portion (42).

Each of the second protrusions (45) protrudes from an upper end of the second cylindrical portion (42) in FIG. 26 to extend in the axial direction (upward) from its proximal end and then extends radially inward to its distal end. The second protrusions (45) are arranged at predetermined second intervals in the circumferential direction. In the example shown in FIG. 26, eight second protrusions (45) are arranged at equal intervals in the circumferential direction. The second protrusions (45) are axially spaced from the magnetic working substances (11).

In the example shown in FIG. 27, the permanent magnet (21) is magnetized in the radial direction. The permanent magnet (21) is arranged with the N pole (a radially inside part in FIG. 27) closer to the first core (30) and the S pole (a radially outside part in FIG. 27) closer to the second core (40). The positions of the N pole and S pole of the permanent magnet (21) may be reversed.

The distal ends of the first protrusion (35) and the second protrusion (45) face each other in the circumferential direction. The first protrusions (35) and the second protrusions (45) constitute magnetic poles (25) of the magnetic field application unit (20). Magnetic gaps are provided between the first protrusions (35) and the second protrusions (45). In the example shown in FIG. 26, eight magnetic gaps are provided. The magnetic working substance (11) is axially spaced from the first protrusion (35) and the second protrusion (45).

When the first protrusions (35) and the second protrusions (45) are opposed to the magnetic working substances (11) in the axial direction, a magnetic flux flows in the circumferential direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the circumferential direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### «Eighth Embodiment»

An eighth embodiment will be described below.

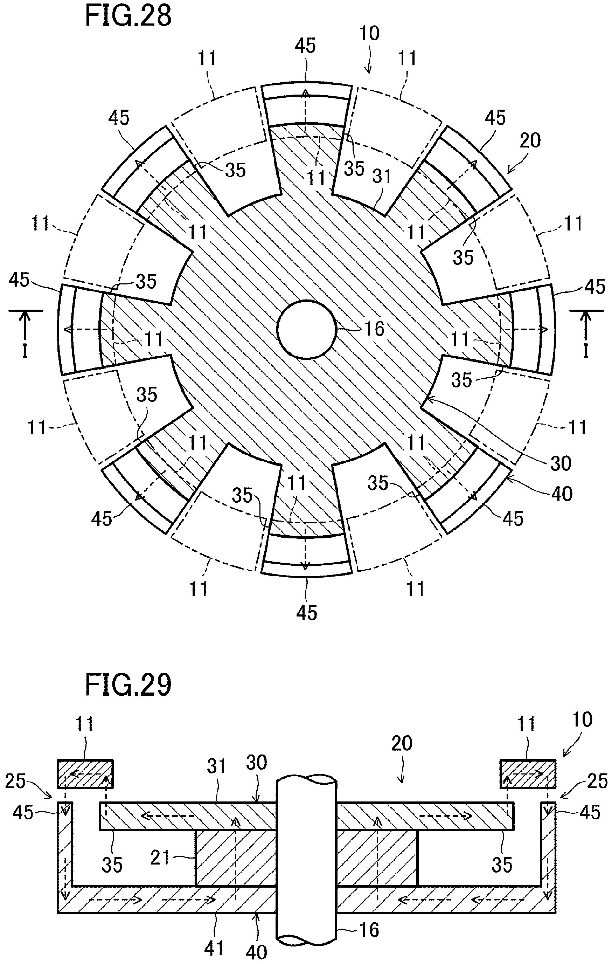

As illustrated in FIGS. 28 and 29, multiple magnetic working substances (11) are arranged at predetermined first intervals in the circumferential direction. In the example shown in FIG. 28, 16 magnetic working substances (11) extending in an arc shape in the circumferential direction are arranged at equal intervals in the circumferential direction.

The magnetic field application unit (20) includes one permanent magnet (21), a first core (30), and a second core (40). The permanent magnet (21) is formed, for example, in a ring shape.

The first core (30) includes a first disc portion (31) and first protrusions (35). The shaft (16) is coupled to the first disc portion (31). The first protrusions (35) extend radially outward from the first disc portion (31). The first protrusions (35) are arranged at predetermined second intervals in the circumferential direction. In the example shown in FIG. 28, eight first protrusions (35) are arranged at equal intervals in the circumferential direction.

The second core (40) includes a second disc portion (41) and second protrusions (45). The shaft (16) is coupled to the second disc portion (41). The permanent magnet (21) is sandwiched between the first disc portion (31) and the second disc portion (41).

Each of the second protrusions (45) protrudes from the second disc portion (41) to extend radially outward from its proximal end and then extends in the axial direction (upward in FIG. 29) to its distal end. The second protrusions (45) are arranged at predetermined second intervals in the circumferential direction. In the example shown in FIG. 28, eight second protrusions (45) are arranged at equal intervals in the circumferential direction.

In the example shown in FIG. 29, the permanent magnet (21) is magnetized in the axial direction. The permanent magnet (21) is arranged with the N pole (an upper part in FIG. 29) closer to the first core (30) and the S pole (a lower part in FIG. 29) closer to the second core (40). The positions of the N pole and S pole of the permanent magnet (21) may be reversed.

The distal ends of the first protrusion (35) and the second protrusion (45) face each other in the radial direction. The first protrusions (35) and the second protrusions (45) constitute magnetic poles (25) of the magnetic field application unit (20). Magnetic gaps are provided between the first protrusions (35) and the second protrusions (45). In the example shown in FIG. 28, eight magnetic gaps are provided. The magnetic working substance (11) faces the first protrusion (35) and the second protrusion (45) in the axial direction.

When the first protrusions (35) and the second protrusions (45) are opposed to the magnetic working substances (11) in the axial direction, a magnetic flux flows in the radial direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the radial direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### «Ninth Embodiment»

A ninth embodiment will be described below.

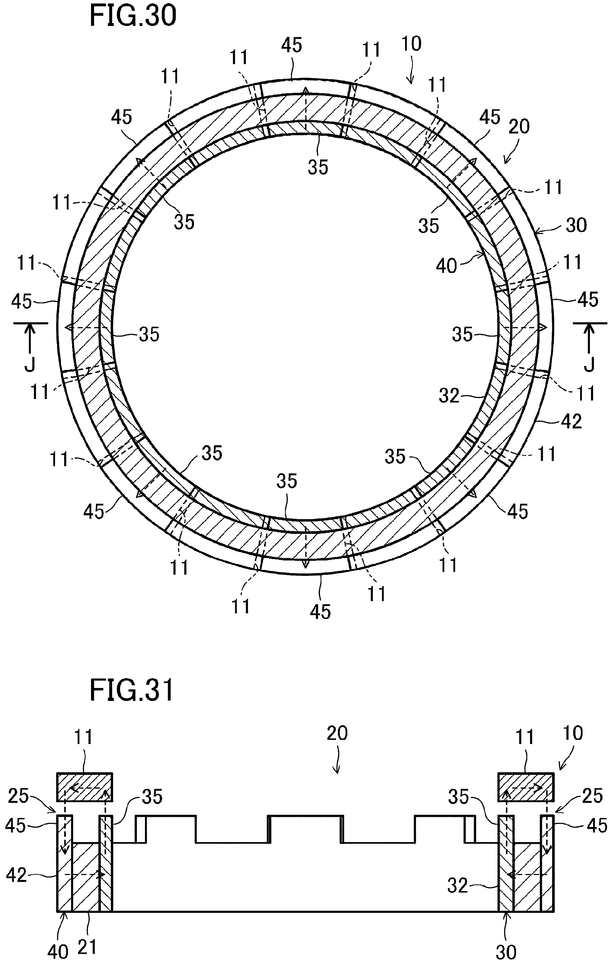

As illustrated in FIGS. 30 and 31, multiple magnetic working substances (11) are arranged at intervals in the circumferential direction. In the example shown in FIG. 30, 16 magnetic working substances (11) extending in an arc shape in the circumferential direction are arranged at equal intervals in the circumferential direction.

The magnetic field application unit (20) includes one permanent magnet (21), a first core (30), and a second core (40). The permanent magnet (21) is formed, for example, in a ring shape.

The first core (30) includes a first cylindrical portion (32) and first protrusions (35). The first protrusions (35) extend in the axial direction (upward) from an upper end of the first cylindrical portion (32) in FIG. 31. The first protrusions (35) are arranged at predetermined second intervals in the circumferential direction. In the example shown in FIG. 30, eight first protrusions (35) are arranged at equal intervals in the circumferential direction. The first protrusions (35) are axially spaced from the magnetic working substances (11).

The second core (40) includes a second cylindrical portion (42) and second protrusions (45). The second cylindrical portion (42) has an inner diameter greater than the outer diameter of the first cylindrical portion (32). The first cylindrical portion (32) is disposed inside the second cylindrical portion (42). The permanent magnet (21) is sandwiched between the first cylindrical portion (32) and the second cylindrical portion (42).

The second protrusions (45) extend in the axial direction (upward) from an upper end of the second cylindrical portion (42) in FIG. 31. The second protrusions (45) are arranged at predetermined second intervals in the circumferential direction. In the example shown in FIG. 30, eight second protrusions (45) are arranged at equal intervals in the circumferential direction. The second protrusions (45) are axially spaced from the magnetic working substances (11).

In the example shown in FIG. 31, the permanent magnet (21) is magnetized in the radial direction. The permanent magnet (21) is arranged with the N pole (a radially inside part in FIG. 31) closer to the first core (30) and the S pole (a radially outside part in FIG. 31) closer to the second core (40). The positions of the N pole and S pole of the permanent magnet (21) may be reversed.

The distal ends of the first protrusion (35) and the second protrusion (45) face each other in the radial direction. The first protrusions (35) and the second protrusions (45) constitute magnetic poles (25) of the magnetic field application unit (20). Magnetic gaps are provided between the first protrusions (35) and the second protrusions (45). In the example shown in FIG. 30, eight magnetic gaps are provided. The magnetic working substance (11) is axially spaced from the first protrusion (35) and the second protrusion (45).

When the first protrusions (35) and the second protrusions (45) are opposed to the magnetic working substances (11) in the axial direction, a magnetic flux flows in the radial direction of the magnetic working substances (11). Note that broken arrows indicate the flow of the magnetic flux.

In the magnetic refrigerator (10), the magnetic flux flows from the permanent magnet (21) toward each of the first protrusions (35) of the first core (30). The magnetic flux flows inside the magnetic working substance (11) in the radial direction from the first protrusion (35) toward the second protrusion (45). The magnetic flux flows from the second protrusion (45) of the second core (40) toward the permanent magnet (21). Thus, the magnetic working substance (11) to which the magnetic field is applied generates heat.

### «Other Embodiments»

The above-described embodiments may be modified as follows.

Although the permanent magnet (21) is used as the magnetic field generator in the above-described embodiments, the magnetic field generator is not limited to this example. For example, an electromagnet may be used as the magnetic field generator.

The ring-shaped permanent magnet (21) used in the embodiments may be replaced with, for example, a polygonal permanent magnet (21). Taking ease of assembly of the permanent magnet (21) into account, the permanent magnet (21) may be divided into, for example, two parts that can be assembled into the ring-shaped permanent magnet (21).

It will be understood that the embodiments and variations described above can be modified with various changes in form and details without departing from the spirit and scope of the claims. The embodiments and variations described above may be appropriately combined or modified by replacing the elements thereof, as long as the functions of the subject matters of the present disclosure are not impaired. In addition, the expressions of "first," "second," "third" and so on in the specification and claims are used to distinguish the terms to which these expressions are given, and do not limit the number and order of the terms.

### INDUSTRIAL APPLICABILITY

As can be seen from the foregoing description, the present disclosure is useful for a magnetic refrigerator and a refrigeration apparatus.

### DESCRIPTION OF REFERENCE CHARACTERS

- 1: Refrigeration Apparatus
- 2: Heating Medium Circuit
- 10: Magnetic Refrigerator
- 11: Magnetic Working Substance
- 20: Magnetic Field Application Unit
- 21: Permanent Magnet (Magnetic Field Generator)
- 30: First Core
- 35: First Protrusion
- 40: Second Core
- 45: Second Protrusion

## Claims

1. A magnetic refrigerator, comprising:
a plurality of magnetic working substances (11) arranged at predetermined first intervals in a first direction; and
a magnetic field application unit (20) that makes a relative movement with respect to the magnetic working substances (11) in the first direction and applies a magnetic field to the magnetic working substances (11), wherein
the magnetic field application unit (20) includes one magnetic field generator (21), a first core (30) provided closer to one of magnetic poles of the magnetic field generator (21), and a second core (40) provided closer to the other magnetic pole of the magnetic field generator (21), and
three or more magnetic gaps are provided between the first core (30) and the second core (40) and are arranged at second intervals that are twice or more the first intervals in the first direction.

2. The magnetic refrigerator of claim 1, wherein
the relative movement is a relative rotational movement about a predetermined axis, and
the first direction is a circumferential direction.

3. The magnetic refrigerator of claim 2, wherein
the magnetic field generator (21) is configured to generate a magnetic field in an axial direction,
the first core (30) includes a first protrusion (35) extending in a radial direction,
the second core (40) includes a second protrusion (45) extending in the radial direction and facing the first protrusion (35), and
the magnetic gap is provided between the first protrusion (35) and the second protrusion (45).

4. The magnetic refrigerator of claim 2, wherein
the magnetic field generator (21) is configured to generate a magnetic field in a radial direction,
the first core (30) includes a first protrusion (35) extending in a radial direction,
the second core (40) includes a second protrusion (45) extending in the radial direction and facing the first protrusion (35), and
the magnetic gap is provided between the first protrusion (35) and the second protrusion (45).

5. The magnetic refrigerator of claim 2, wherein
the magnetic field generator (21) is configured to generate a magnetic field in a radial direction,
the first core (30) includes a first protrusion extending in an axial direction,
the second core (40) includes a second protrusion (45) extending in the axial direction and facing the first protrusion (35), and
the magnetic gap is provided between the first protrusion (35) and the second protrusion (45).

6. The magnetic refrigerator of claim 2, wherein
the magnetic field generator (21) is configured to generate a magnetic field in an axial direction,
the first core (30) includes a first protrusion (35) extending in an axial direction,
the second core (40) includes a second protrusion (45) extending in the axial direction and facing the first protrusion (35), and
the magnetic gap is provided between the first protrusion (35) and the second protrusion (45).

7. The magnetic refrigerator of claim 2, wherein
the magnetic field generator (21) is configured to generate a magnetic field in an axial direction,
the first core (30) includes a first protrusion (35) extending in a radial direction,
the second core (40) includes a second protrusion (45) extending in the axial direction and facing the first protrusion (35), and
the magnetic gap is provided between the first protrusion (35) and the second protrusion (45).

8. The magnetic refrigerator of any one of claims 3 to 7, wherein
the magnetic working substances (11) are disposed at a position with the minimum magnetic resistance between the first protrusion (35) and the second protrusion (45).

9. The magnetic refrigerator of any one of claims 3 to 7, wherein
the magnetic working substances (11) are disposed to face distal ends of the first protrusion (35) and the second protrusion (45).

10. A refrigeration apparatus, comprising:
the magnetic refrigerator (10) of any one of claims 1 to 9; and
a heating medium circuit (2) configured to exchange heat with the magnetic refrigerator (10).
